# EUROPÄISCHE PATENTSCHRIFT

(11) **EP 3 008 253 B1**
(45) Veröffentlichungstag und Bekanntmachung des Hinweises auf die Patenterteilung: **28.12.2016**
(21) Anmeldenummer: 15734553.9
(22) Anmeldetag: 13.04.2015
(51) Int. Cl.: E02F 3/88, E02F 5/00, E21C 50/00

(54) **VORRICHTUNG ZUM AUFNEHMEN UND ENTFERNEN VON AUF GEWÄSSERBÖDEN ABGELAGERTEN PLASTISCHEN, SCHLAMMARTIGEN STOFFEN**
DREDGING APPARATUS FOR COLLECTING AND REMOVING MUD MATERIAL OR THE LIKE FROM SEA FLOOR
APPAREIL DE DRAGAGE POUR COLLECTER ET ENLEVER DES MATÉRIAUX DE TYPE BOUEUX D'UN SOL MARIN

(30) Priorität: 16.04.2014 DE 102014005737
(43) Veröffentlichungstag der Anmeldung: 20.04.2016
(73) Patentinhaber: Linner, Georg, 83562 Rechtmehring (DE)
(72) Erfinder: Linner, Georg, 83562 Rechtmehring (DE)
(74) Vertreter: Zinken-Sommer, Rainer
(86) Internationale Anmeldenummer: PCT/DE2015/000186
(87) Internationale Veröffentlichungsnummer: WO 2015/158322

(56) Entgegenhaltungen:
- WO-A1-2012/158028
- DD-B1- 201 617
- DE-A1- 2 411 140
- DE-A1- 3 129 228
- DE-A1- 3 923 113
- DE-A1- 19 960 361
- DE-B4-102004 017 201
- DE-C2- 3 333 633
- DE-C2- 3 630 032
- DE-C3- 2 236 448
- FR-A1- 2 507 643
- US-A- 3 551 930
- US-B2- 6 922 922
- DATABASE WPI Week 200912 Thomson Scientific, London, GB; AN 2009-E79368 XP002743758, -& CN 201 183 967 Y (CHEN M) 21. Januar 2009 (2009-01-21)

## Beschreibung

Die Erfindung betrifft eine Vorrichtung zum Aufnehmen und Entfernen von auf Gewässerböden abgelagerten plastischen, schlammartigen Stoffen, wobei die Stoffe systematisch und umweltschonend abgesaugt werden sollen.

Zur Reinhaltung von Gewässern, zur Entgiftung von Meeres-, Fluss- und Seeböden und zur Reaktivierung der Bodenflora und -fauna ist es bekannt, die die Gewässerböden bedeckenden Verunreinigungsstoffe abzupumpen bzw. abzusaugen. Dies kann beispielsweise mittels eines rohrförmigen Gelenkarmes mit dazugehörigen Absaugeinrichtungen erfolgen, wozu allerdings eine relativ aufwendige Ausstattung an Bord eines Trägerschiffes benötigt wird (DE 3630032 C2).

Eine derartige Vorrichtung beschreibt auch die DE 199 60 361 A1, bei der ein Schleppkopf eines Laderaumsaugbaggers zur Förderung von Wasser-Boden-Gemischen aus Gewässern beschrieben wird. Die Ausbildung des Schleppkopfes ist in erster Linie abhängig von der Art des zu fördernden Erdreiches. Der Schleppkopf weist dabei in der Regel Druckwasserdüsen auf, die den Gewässergrund aufwirbeln und danach besser absaugbar machen sollen.

Eine ähnliche Vorrichtung wird in der DD 201 617 B1 beschrieben, wobei dort ein Schwimmponton mit einer beweglichen Saug-Spül-Vorrichtung verbunden ist, die über Kufen und Winden am Gewässergrund entlanggezogen wird. An der Ansaugfläche ist dabei ein Sieb zur Vermeidung des Einsaugens von Grobbestandteilen angebracht.

Aus der DE 39 23 113 A1 ist eine weitere Vorrichtung zur Entsorgung pumpfähiger Gewässerböden bekannt, wobei dort ein Unterwassergerät als Glocke mit einem Düsensystem ausgebildet ist, welches eine tauchfähige Pumpe aufweist, die von einem Ansaugtrichter umgeben ist. Die Pumpe steht über einen flexiblen Schlauch und einer flexiblen Versorgungs- und Steuerungsleitung mit dem Unterwasserschwimmkörper in Verbindung.

Ein ähnliches Gerät beschreibt die DE 10 2004 017 201 B4. Die Absaugvorrichtung wird hier schwebend an einem flexiblen Schlauch durch das Wasser gezogen.

Aus der DE 22 36 448 C3 ist ein Wasserfahrzeug bekannt, welches über einen Heckantrieb selbständig bewegbar und mit einem Saugrüssel ausgestattet ist, der an seinem Eintritt eine rotierende Bürste aufweist.

Alle derartig bekannten Gewässergrundabsaugvorrichtungen weisen die gleichen Mängel auf:
- Es ist keine effektive, systematische Untergrundabsaugung möglich, die den Gewässergrund schonend behandelt.
- Es ist keine schichtweise Absaugung möglich.
- Es existiert kein selbständiger Schreitmechanismus. Alle derartigen Vorrichtungen müssen vom Saugbagger/Fahrzeug gezogen werden und agieren nicht selbständig.
- Es ist kein Monitoring der Saugvorrichtung möglich, mit welchem ein Pilot steuernde Maßnahmen einleiten kann.

Die DE 24 11 140 A1 beschreibt eine Vorrichtung zum Einbetten von auf einem Gewässergrund liegenden Rohren, die ein Raupenfahrwerk mit einer Grab-SaugVorrichtung aufweist. Hiermit kann jedoch kein Gewässergrund systematisch abgetragen und gereinigt werden. Das Raupenfahrwerk ist zudem nicht in einer steuerbaren Ausführung aufgebaut, die Richtung wird durch die verlegten Rohre vorgegeben.

Die DE 31 29 228 A1 beschreibt ein Gerät zur Unterwasserbaggerung für verfestigte Böden, sowohl in Binnengewässern, als auch im Off-Shore-Bereich. Die selbstfahrende Unterwasser-Saufschürfung besteht im Wesentlichen aus einem Raupenfahrwerk, einem Schürfschild, einem Ansaugtrichter und einer Panzerpumpe. Die Förderung erfolgt hydraulisch über eine flexible Schlauchleitung zu einem Begleitschiff, von dem aus die Unterwasser-Saugschürfraupe mit Energie versorgt und gesteuert wird. Die Unterwasser-Saugschürfraupe weist Auftriebskörper auf, mittels derer das Fahrzeug an die Oberfläche gebracht werden kann.

Aus der WO 2012/158028 A1 ist eine ebenfalls an ein Schiff gekoppelte bekannte Unterwasser-Saug-Vorrichtung bekannt, die gleichfalls mit einem Raupenfahrwerk ausgestattet ist. Die Saugvorrichtung weist einen bekannten Saugrüssel auf.

Die WO 2011/134 733 A1 betrifft einen Schneidsaugbagger mit einem Saugrohr und mit einem Schneidkopf, wobei der Schneidkopf umfasst:
- eine kontinuierliche Bahn für die Bewegung des Schneidkopfes über eine Bodenober Fläche,
- mindestens einen Laser-Kopf an der Strecke für das Ausrichten eines Laserstrahls auf die zu bearbeitende Bodenfläche.

In der US 6,922,922 B2 wird ein Amphibien-Wasserfahrzeug zum Betrieb über, als auch Unterwasser beschrieben, wobei dieses Fahrzeug ein Raupenfahrwerk, eine Aufwirbelungs-Walze und eine Absaugvorrichtung für Bodenbestandteile aufweist.

Nachteil der beschriebenen Unterwasser-Raupenfahrzeuge ist, dass diese weder über eine eigene Steuerung, noch über eine frei schwingende und dem Boden angepasste Aufwirbelungseinrichtung verfügen.

Aus der Poolreinigung sind selbstfahrende Saugköpfe zur Reinigung der Böden bekannt, die ebenfalls Raupenfahrwerke verwenden. Die DE 33 33 633 C2 beschreibt einen derartigen Saugkopf.

Auch aus der US 3.551.930 ist eine solche Vorrichtung bekannt.

Alle Poolreiniger weisen jedoch folgende Mängel auf:
- Sie sind für einen Einsatz in freien Gewässern völlig ungeeignet, da in der Regel keine direkte Verbindung zum Land oder zur Gewässeroberfläche besteht, um die Schlämme zu entsorgen (Beutel).
- Die Laufwerke sind nur für relativ glatte Böden geeignet.
- Es findet keine systematische Abreinigung des Gewässerbodens statt, sondern nur nach dem Zufallsprinzip.
- Es ist kein Schichtenabtrag von Schlamm am Gewässerboden möglich.
- Sie sind nicht durch einen Bediener steuerbar.
- Selbst in größerer Dimension angefertigt würden diese im Schlamm stecken bleiben, bzw. die Pumpen blockieren.

Der Erfindung liegt die Aufgabe zugrunde, eine Vorrichtung zu entwickeln, die den Gewässergrund systematisch erfasst, schonend schichtenweise absaugt und sich selbständig auch bei groben Hindernissen auf diesem fortbewegt.

Dies wird erfindungsgemäß durch die Vorrichtung nach Patentanspruch 1 bis 20 erreicht.

Die erfindungsgemäße Lösung betrifft dabei eine durch Kombination von Bildgebungsverfahren (Sonar zur Generalübersicht, GPS, als auch stationäre Kameras zur unmittelbaren Umgebung) zum choreographierten Schlammabbau ausgestattete, manuell mittels Auftriebskörpern und Raupenantrieb auf die Fortbewegung auf schlammigen/unterschiedlich dichten Untergründen optimierte, steuerbare Saugeinheit, die Schlamm und Sediment mittels Kehrwalze lockert, durch konkrete Strömungsrichtung mit dem umgebenden Wasser verflüssigt, in einer eigens konzipierten Saugglocke zusammenfast, hierbei zunächst Großkörper mittels rechenartiger Verbauung abscheidet, die schwingend gelagerte Kehrwalze über größere Hindernisse hinwegführt, Klein- und Pflanzenteile nach Zusammenfassung von Saugkanälen in variabler Anzahl mittels in Reihe geschaltetem Schneid- und Häckselwerk, das Pflanzenfasern und Fremdkörper auf unter 3 cm reduziert, um die Verstopfung / Blockierung gekoppelter Pumpen zu verhindern.

Die Pumpen befinden sich neben dem Hydraulik- und Pressluftaggregat auf der Steuereinheit, einem mittels Außenborder steuerbaren Schwimmkörper, z.B. Katamaran, der die vom Saugmodul herkommenden Saugschläuche nach den Pumpen bündelt und durch einen Flachschlauch, der für Auftriebszwecke mit einem mit Pressluft befüllten weiteren Schlauch verklebt oder anderweitig verbunden ist, um die Schlauchleitung barrierefrei an der Gewässeroberfläche zu führen.

Die Pumpe(n) kann allerdings auch an oder in der Saugglocke angeordnet sein. Falls sie an oder in der Saugglocke angeordnet ist/sind, kann sie über eine Rohrleitung und den Schwimmkörper oder über eine direkte Verbindung mit dem Spülfeld oder dem Absetzbecken oder dem transportablen Behälter verbunden sein.

Bei bisherigen Verfahren wie z. B. dem Saugbagger findet die Positionierung der Saugeinheit indirekt über die Schwimmeinheit statt. Diese muss also erst in Position gebracht werden, wovon aus anschließend die Saugeinheit auf Verdacht gesteuert werden kann. Dies stellt eine sehr ungenaue Steuermöglichkeit dar. Bei der erfindungsgemäßen Lösung ist die Steuerungseinheit der passive Teil. Das Saugmodul wird über ein Monitoring per Echolot genau in den abzusaugenden Teil manövriert und zieht hierbei die Steuereinheit hinter sich her. Bei Bedarf kann diese aber auch eigens positioniert werden. Andere Systeme (Poolsauger) nutzen als Roboter ein chaotisches System der Steuerung, dies ist für Dimensionen von Weihern oder Seen unpraktikabel, da permanent Schläuche verlegt werden müssten oder aber eine chaotische Steuerung nicht in Frage kommt, da ggf. bestimmte Bereiche z. B. geschützte Seerosenfelder ausgespart werden müssen. Wiederum andere Sauger müssen ineffektiv per Hand positioniert werden.

Am Beispiel des Poolsaugers ist klar zu erkennen, dass die Raupe und die gesamte Saugeinheit auf unwegsames, schlammiges Areal ausgelegt sein müssen. Der Poolsauger würde im angedachten Einsatzgebiet nicht vorankommen. Die Raupe der erfindungsgemäßen Lösung weist in ihrer Form vorne und hinten eine Schräge sowie eine enorme Auflagefläche auf, so dass ein Versinken oder Steckenbleiben des Saugers ausgeschlossen ist. Der Antrieb erfolgt über eine an der Innenseite der Raupenkette gefestigte Zahnleiste in die ein Zahnrad einer Antriebseinheit eingreift.

Durch das Monitoring mittels Einsatz des Echolotes und/oder des GPS-Systems und/oder des Kamerasystems ist wie beschrieben eine flächendeckende Entnahme von Schlamm möglich. Eine Kombination aller drei Systeme ist möglich. Je nach Kundenwunsch kann damit der Schlamm in einer definierten Stärke entnommen werden, da dieser in Schichten von ca. 30 cm entnommen wird. Durch diese Verfahrensweise wird also keine Kraterlandschaft hinterlassen. Die Entnahme einer definierten Menge kann nötig sein, wenn z. B. mehrere Meter mächtiger Schlamm vorliegt, dieser aber aus Kosten-, Zeit- oder Entsorgungsgründen nicht komplett entnommen werden soll, eine Entnahme der oberen Schicht aber eine Linderung der Probleme, welche durch den Schlamm verursacht wurden, verspricht.

Durch den Einsatz der schwingend gelagerten Kehrwalze ist ein Eintiefen des ursprünglichen Bodenprofils ausgeschlossen. Muscheln stärker einem Zentimeter werden über den Rechen abgeschieden und durch die flexiblen Borsten nicht zerstört. Im Gegensatz zu tonnenschweren Saugbaggern ist zu Rüstzeiten keine Beeinträchtigung der Uferökologie zu erwarten, da sich das Gewicht des Schlammsaugers auf weniger als 200 kg beschränkt und dieses über die Raupen auf den Boden verteilt.

Bei der erfindungsgemäßen Lösung ist die Pumpe auf extremes Schmutzwasser ausgelegt.

Das vorgeschaltete Schneidwerk zerkleinert zu große oder langfaserige Fremdkörper. Der dem Schneidwerk wiederum vorgeschalteten rechenartige Abstreifer scheidet allzu große Fremdkörper von vorn herein ab.

Vor dem Raupenfahrwerk können zusätzlich ein oder mehrere Mähwerke angeordnet sein. Dies kann dann notwendig werden, wenn der Gewässergrund sehr stark mit Pflanzen oder Pflanzenresten oder anderen Verunreinigungen bestückt ist oder das Mähen von Pflanzen Teil des Auftrages ist.

Im Gegensatz zu bekannten Poolsaugern ist die Kehrwalze der erfindungsgemäßen Lösung schwingend gelagert, wodurch sich diese auch einem unregelmäßig geformten Bodenprofil anpassen kann. Eine Schädigung des Saugmoduls ist hierdurch ausgeschlossen. Das Saugmodul bleibt somit nicht stecken/hängen.

Durch den teilweise um die Kehrwalze herum und in deren Borsten eingreifenden rechenartigen Abstreifer wird abgesichert, dass dieser (Abstreifer) während des Betriebs nicht verstopft wird.

Eine Vermeidung von Verstopfungen sowie eine Strömungsregulierung wird auch durch die spezielle Anordnung der Platte bzw. des Leitbleches in der Saugglocke erreicht, wobei am Ende der Platte bzw. des Leitbleches der rechenartige Abstreifer befestigt ist, der wie bereits beschrieben, teilweise um bzw. in die Borsten der Kehrwalze eingreift.

### Liste der verwendeten Bezugszeichen

- 1: Lager
- 2: Schwenkarm
- 3: Dichtplatte
- 4: Saugglocke
- 5: Schneidwerk
- 6: Kehrwalze
- 7: Rechen/Abstreifer
- 8: Motor/Antrieb
- 9: Saugstutzen/Flansch
- 10: Raupe
- 11: Saugmodul
- 12: Steuereinheit
- 13: Pumpe
- 14: Saugschlauch
- 15: Hydraulikleitung
- 16: Hydraulikaggregat
- 17: Hydrauliksteuerung
- 18: Schwimmkörper
- 19: Kompressor
- 20: Stromaggregat
- 21: Schmutzwasser-Sammler
- 22: Sammel-Druckschlauch
- 23: Umlenkrollen
- 24: Schlauch als Auftriebskörper
- 25: Gewässeroberfläche
- 26: Echolotgeber
- 27: Sendekegel
- 28: Schlamm
- 29: abgesaugter Schlamm
- 30: Kabel/ausziehbare Angelschnur

### Ausführungsbeispiel

Anschließend soll die Erfindung anhand eines Ausführungsbeispiels näher erläutert werden.

### Dabei zeigen:

- - Figur 1: - die gesamte Vorrichtung im Einsatzfall von oben
- - Figur 2: - die gesamte Vorrichtung im Einsatzfall von der Seite
- - Figur 3: - die gesamte Vorrichtung im Einsatzfall im Querschnitt
- - Figur 4: - den Saugmodul mit Raupenfahrwerk, Schwenkarmen und Kehrwalze von oben
- - Figur 5: - den Saugmodul im Querschnitt/Seitenansicht
- - Figur 6: - das Raupenfahrwerk im Querschnitt

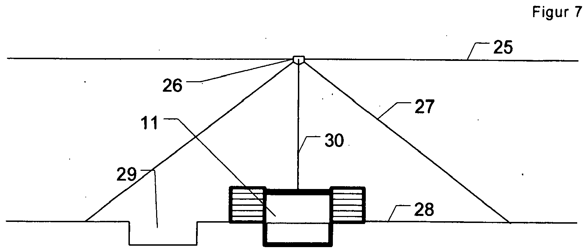

- - Figur 7: - den Saugmodul mit Echolotgeber auf dem Gewässer-Grund
- - Figur 8: - den Verflüssiger mit Schwenkarm, Kehrwalze, Saugglocke, rechenartigen Abstreifer(n), Sieb und Schneidwerk im Querschnitt

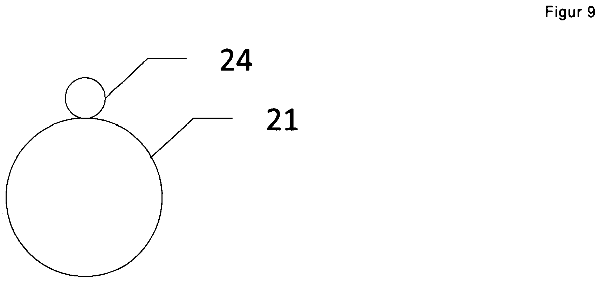

- - Figur 9: - den Querschnitt des schwimmfähigen Sammel-Druckschlauchs
- - Figur 10: - Verflüssiger von unten
- - Figur 11: - Verflüssiger von hinten

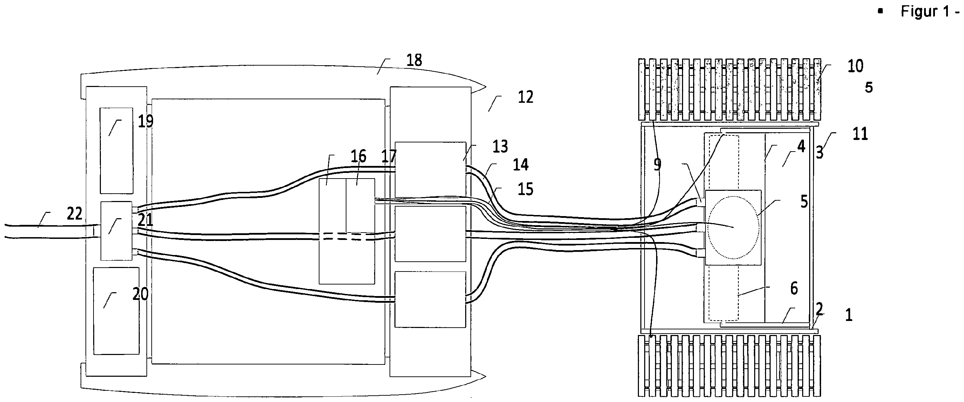

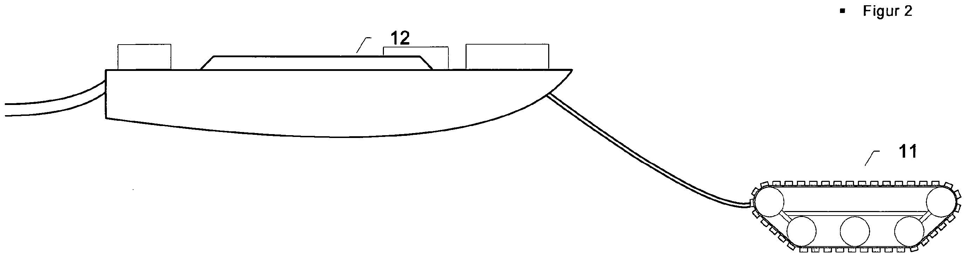

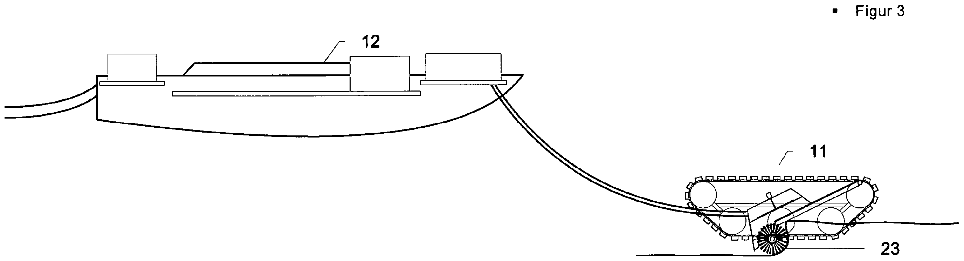

Das Saugmodul 11 ist über den Saugschlauch 14 und die Hydraulikleitungen 15 mit der Steuereinheit 12 verbunden (Figur 1, 2 und 3).

Die vorzugsweise als Katamaran ausgebildete Steuereinheit 12 weist den Schwimmkörper 18 auf. Auf dem Schwimmkörper 18 ist eine Pumpe 13, ein Hydraulikaggregat 16, eine Hydrauliksteuerung 17, ein Kompressor 19, ein Stromaggregat 20 und ein Schmutzwasser-Sammler 21 angeordnet. Der Schmutzwasser-Sammler 21 ist über einen Sammel-Druckschlauch 22 an Land mit einem nicht dargestellten Spülfeld oder einem Absetzbecken oder einer mobilen Auffangstation für das Spülgut verbunden. Der Sammel-Druckschlauch 22 ist in seiner Längsrichtung mit einem luftführenden Schlauch 24 gekoppelt, der als Auftriebskörper dient.

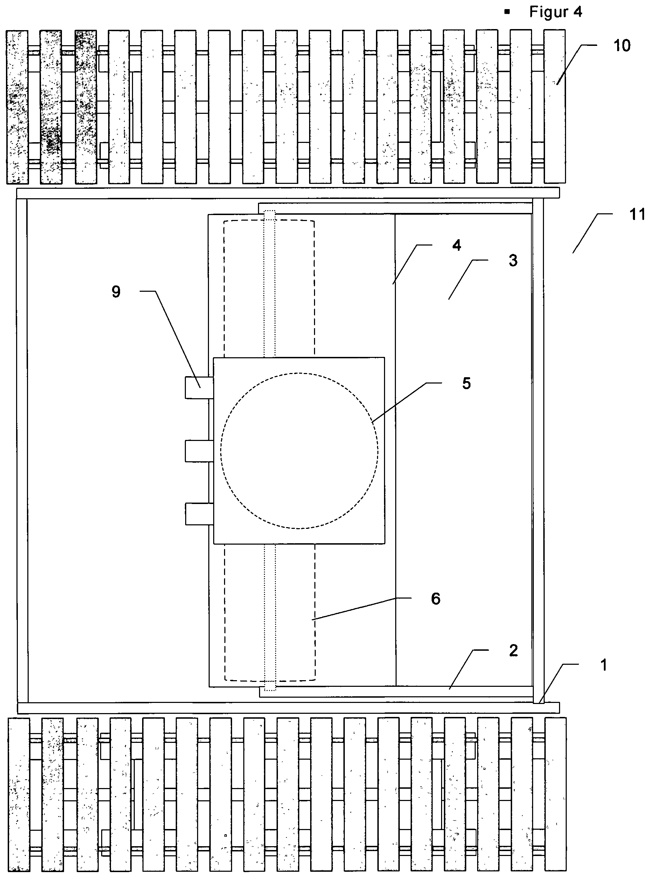

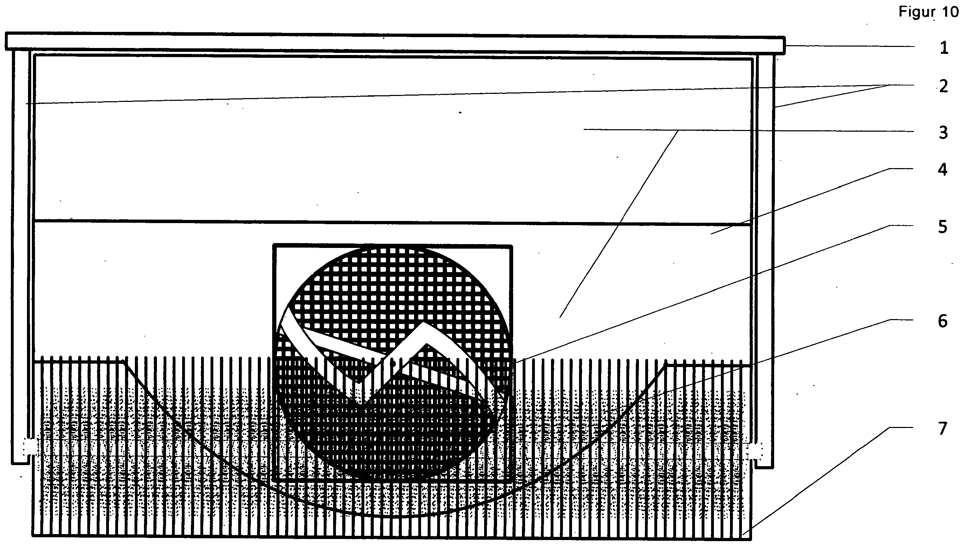

Die Hydrauliksteuerung 17 ist über die Hydraulikleitungen 15 mit dem Saugmodul 11 verbunden. Die auf der Steuereinheit 12 ebenfalls angeordneten Pumpe(n) 13 sind über die Saugschläuche 14 mit den Saugstutzen 9 des Saugmoduls 12 verbunden. Die Saugstutzen 9 sind an der Saugglocke 4 angeordnet. Auf der Saugglocke 4 ist der Antrieb 8 des Schneidwerkes 5 positioniert, welches sich in der Saugglocke 4 befindet und für die Zerkleinerung grober Bestandteile des Spülgutes zuständig ist (Figur 4). Das Schneidwerk 5 weist mindestens zwei gegenläufig sich drehende Messer auf, wobei mindestens ein Messer eine etwa Z-förmige Form besitzt (Figur 10).

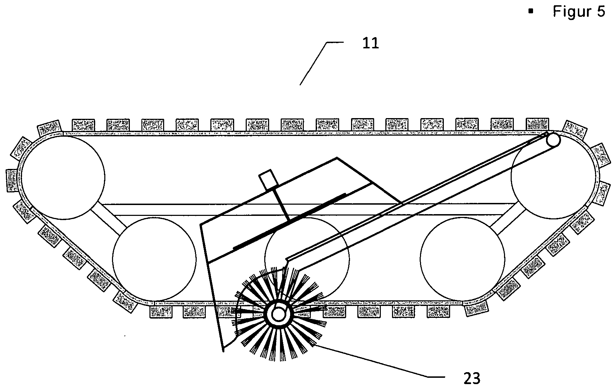

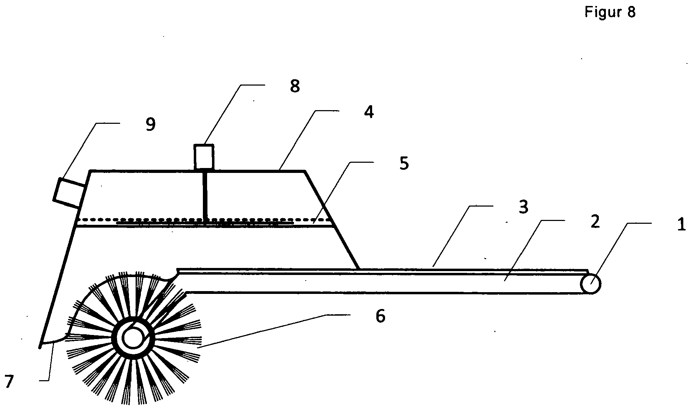

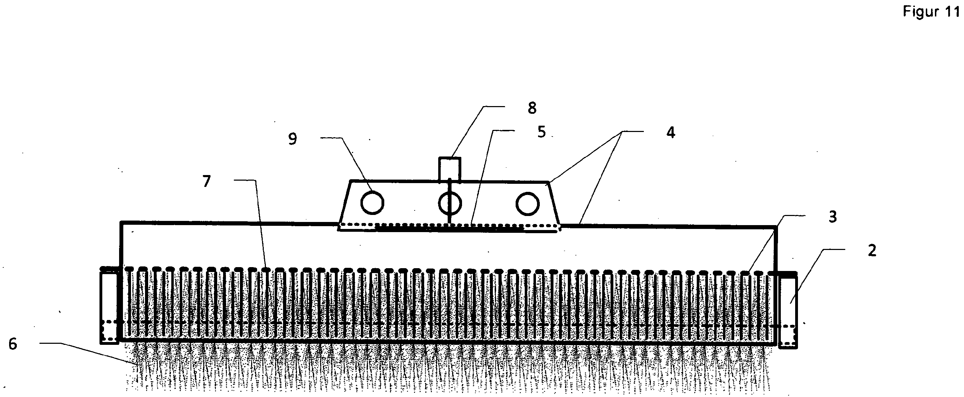

Die Saugglocke 4 ist auf den beiden Schwenkarmen 2 sowie auf der Dichtplatte 3 und dem Rechen 7 abgestützt (Figur 8). Die Schwenkarme 2 weisen zwei Lager 1 auf, die an einem Drehpunkt am Fahrwerk des Saugmoduls 11 angebracht sind (Figur 5). Damit können sich die Schwenkarme 2 und mit ihnen die zwischen beiden angeordnete rotierende Kehrwalze 6 in vertikaler Richtung bewegen und über Hindernisse am Gewässerboden hinweggeführt werden. Die Kehrwalze 6 kann in beiden Richtungen rotierend bewegt werden. Es ist möglich, die Borsten der Kehrwalze 6 aus verschiedenen Materialien und in verschiedener Länge, je nach Beschaffenheit des Gewässergrundes, austauschbar auszuführen (Figur 11).
Der teilweise um die Kehrwalze 6 herumgeführte und teilweise in die Kehrwalze 6 eingreifende Rechen 7 sorgt für eine Reinigung derselben und verhindert ein Zuführen von sehr großen Grobbestandteilen in das Innere der Saugglocke 9.

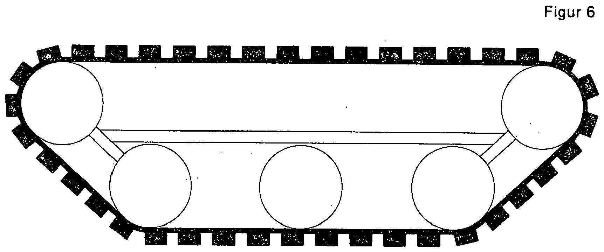

Das Fahrwerk des Saugmoduls 11 ist seitlich außerhalb der Schwenkarme 2 angeordnet. Es weist zwei Raupen 10 auf, die über mehrere Umlenkrollen 23 geführt werden. Dabei sind die Umlenkrollen so angeordnet, dass sich in jeder Fahrtrichtung des Saugmoduls 11 eine schräge Führung der Raupen 10 ergibt, was zu einer sicheren Fortbewegung - ohne die Gefahr eines Festfahrens - auf dem Gewässergrund führt (Figur 6). Jede Raupe 10 weist an ihrer Innenseite eine Zahnleiste auf, in die jeweils ein Zahnrad des Antriebs eingreift.

An der Gewässeroberfläche 25 direkt über dem Saugmodul 11 ist schwimmend ein Echolotgeber 26 angeordnet. Der Echolotgeber 26 dient dem Monitoring des Saugmoduls 11. Dabei ist der Echolotgeber 26 vorzugsweise über eine ausziehbare Angelschnur 30 mit dem Saugmodul 11 verbunden. Der sich durch den Echolotgeber 26 ausbildende Sendekegel 27 übergreift das Saugmodul 11, die bereits abgesaugten Schlammbereiche 29 und die noch nicht abgesaugten Schlammbereiche 28. Damit ist eine exakte Steuerung des Saugmoduls 11 und der Steuereinheit 12 möglich, sodass die notwendigerweise zu reinigenden Gewässergrundoberflächen exakt von den bereits gereinigten Flächen zu unterscheiden sind.
Selbstverständlich kann anstelle einer ausziehbaren Angelschnur 30 auch ein weitgehend ähnliches Befestigungsmittel zwischen Echolotgeber 26 und Saugmodul 11 verwendet werden.
Alternativ kann anstelle des Echolotgebers 26 oder zusätzlich zu diesem ein GPS-System und/oder ein Kamerasystem auf der Steuereinheit 12 angeordnet werden, um das Saugmodul 11 optimal steuern zu können.

## Patentansprüche

1. Vorrichtung zum Aufnehmen und Entfernen von auf Gewässerböden abgelagerten plastischen, schlammartigen Stoffen, wobei ein steuerbarer Schwimmkörper über Schlauchleitungen mit einem Saugmodul verbunden ist,
***gekennzeichnet dadurch, dass***
der steuerbare Schwimmkörper (12;18) mit mindestens einer Pumpe/Kompressor (13) und mindestens einem Hydraulikaggregat (16) sowie mindestens einem Stromerzeuger (20) ausgestattet ist und über Rohrleitungen (22; 14) einerseits mit einem Spülfeld oder einem Absetzbecken oder einem transportablen Behälter an Land sowie andererseits mit dem Saugmodul (11) verbunden ist, welches
➢ sich am Gewässergrund selbständig über ein spezielles Raupenfahrwerk (10) fortbewegt,
➢ über ein Kabel (30) mit einem auf der Gewässeroberfläche schwimmend über dem Saugmodul (11) angeordneten Echolotgeber (26) und/oder einem GPS-Empfänger verbunden ist,
➢ zwischen und/oder vor und/oder hinter den Raupenketten des Raupenfahrwerks (10) einen selbständig sich dem Gewässerboden anpassenden, frei schwingenden, ein- oder doppel- oder mehrarmigen Schwenkarm (2) sowie
➢ eine zwischen dem/den Schwenkarm(en) (2) angeordnete Abdichtplatte(3) und eine Kehrwalze (6) aufweist,
➢ wobei die Kehrwalze (6) in einer Saugglocke (4) geführt ist,
➢ in der ein Schneidwerk (5) angeordnet ist
➢ und die Saugglocke (4) mindestens einen Flansch/Saugstutzen (9) für mindestens einen Saugschlauch (14) aufweist.

2. Vorrichtung nach Anspruch 1, ***gekennzeichnet dadurch, dass*** das Saugmodul (11) innerhalb der vorzugsweise halbschalenförmigen Saugglocke (4) vor und/oder nach der Kehrwalze (6) Richtung Gewässergrund, hauptsächlich in Richtung Schneidwerk (5), mindestens einen rechenartigen Abstreifer (7) aufweist, der um die Kehrwalze (6) zumindest teilweise geführt ist und in deren Borsten zumindest teilweise eingreift.

3. Vorrichtung nach Anspruch 1 und 2, ***gekennzeichnet dadurch, dass*** oberhalb der Kehrwalze (6) zwischen den beiden Schwenkarmen (2) eine Dichtplatte (3) und/oder ein Leitblech befestigt ist, welches zur Kehrwalze (6) einen Spalt bildet, welcher durch seine Formgebung die Strömungsgeschwindigkeit über die Länge der Kehrwalze (6) steuert.

4. Vorrichtung nach Anspruch 1 bis 3, ***gekennzeichnet dadurch, dass*** oberhalb der Kehrwalze (6) und oberhalb der Dichtplatte (3) und/oder dem Leitblech ein Sieb und/oder ein Gitter angeordnet sind.

5. Vorrichtung nach Anspruch 4, ***gekennzeichnet dadurch, dass*** unterhalb des Siebes und/oder des Gitters als rotierendes Schneidwerk (5) mindestens ein Messer angeordnet ist.

6. Vorrichtung nach Anspruch 5, ***gekennzeichnet dadurch, dass*** unterhalb des rotierenden Messers ein statisch angeordnetes doppelsichelförmiges Messer angeordnet ist.

7. Vorrichtung nach Anspruch 5 und 6, ***gekennzeichnet dadurch, dass*** die Messer scherenartig ausgebildet sind.

8. Vorrichtung nach Anspruch 5 bis 7, ***gekennzeichnet dadurch, dass*** das Schneidwerk (5) durch einen am Außenumfang der Saugglocke (4) angeordneten Motor/Antrieb (8) angetrieben wird.

9. Vorrichtung nach Anspruch1 bis 4, ***gekennzeichnet dadurch, dass*** vor dem Raupenfahrwerk (10) ein oder mehrere Mähwerke angeordnet sind.

10. Vorrichtung nach Anspruch 5 bis 9, ***gekennzeichnet dadurch, dass*** die Pumpe (13) auf oder in oder an der Saugglocke angeordnet ist.

11. Vorrichtung nach Anspruch 10, ***gekennzeichnet dadurch, dass*** die Pumpe (13) über Rohrleitungen (22; 14) über den Schwimmkörper (12; 18) oder direkt mit dem Spülfeld oder dem Absetzbecken oder dem transportablen Behälter verbunden ist.

12. Vorrichtung nach Anspruch 1 bis 4, ***gekennzeichnet dadurch, dass*** die Kehrwalze (6) einen eigenen Antrieb aufweist.

13. Vorrichtung nach Anspruch 1 bis 4 und 12, ***gekennzeichnet dadurch, dass*** die Kehrwalze (6) einen Links- und einen Rechtslauf aufweist.

14. Vorrichtung nach Anspruch 1, ***gekennzeichnet dadurch, dass*** das Raupenfahrwerk (10) an beiden Enden eine aufsteigende Schräge aufweist.

15. Vorrichtung nach Anspruch 1 und 14, ***gekennzeichnet dadurch, dass*** das Raupenfahrwerk (10) an seiner Innenseite vorzugsweise mittig eine Zahnleiste aufweist, in der ein Antrieb mit seinem Zahnrad eingreift.

16. Vorrichtung nach Anspruch 1 bis 15, ***gekennzeichnet dadurch, dass*** das Echolot (26) und/oder das GPS-System und/oder das Kamerasystem auf dem steuerbaren Schwimmkörper angeordnet und mit dem Antrieb des Raupenfahrwerkes (10) und einer Steuerung desselben verbunden ist.

17. Vorrichtung nach Anspruch 16, ***gekennzeichnet dadurch, dass*** die Steuerung ein systematisches Abreinigungsbild des Gewässergrundes erzeugt und absichert, dass das Saugmodul (11) die nötigen Stellen des Gewässergrundes mindestens einmal abreinigt.

18. Vorrichtung nach Anspruch 1, ***gekennzeichnet dadurch, dass*** der Schwimmkörper (18) ein Katamaranfahrzeug oder ein Ponton ist, welches einen eigenen Antrieb aufweist.

19. Vorrichtung nach Anspruch 1, ***gekennzeichnet dadurch, dass*** die Rohrleitungen (14) und/oder Druckschläuche (22) als Flachschläuche ausbildet sind, auf denen für Auftriebszwecke ein weiterer vorzugsweise mit Pressluft gefüllter Schlauch (24) aufgeklebt oder vulkanisiert oder anderweitig befestigt ist.

20. Vorrichtung nach Anspruch 1 bis 19, ***gekennzeichnet dadurch, dass*** der Saugmodul (11) einen Auftriebskörper aufweist.

## Claims

1. Device for collecting and removing plastic, sludge-like materials deposited on beds of bodies of water, wherein a controllable floating body is connected to a suction module via hose lines,
**characterised in that**
the controllable floating body (12; 18) is equipped with at least one pump/compressor (13) and at least one hydraulic unit (16) as well as at least one power set (20) and on land is connected at one end to a sludge pond or sedimentation tank or a transportable container via pipelines (22; 14) and at the other end to the suction module (11), which
> travels independently over the bed of the body of water on a special caterpillar chassis (10),
> is connected to an echo-sounder (26) and/or a GPS receiver floating on the water surface above suction module (11) via a cable (30),
> has a freely oscillating single- or double- or multi-arm pivoting arm (2) that adapts autonomously to the bed of the body of water, arranged between and/or in front of and/or behind the caterpillar tracks of the caterpillar chassis (10), and
> a sealing plate (3) arranged between the pivoting arm(s) (2) and a sweeping roller (6),
> wherein the sweeping roller (6) is mounted inside a suction bell (4),
> in which a cutting unit (5) is arranged,
> and the suction bell (4) has at least one flange/suction port (9) for at least one suction hose (14).

2. Device according to claim 1, **characterised in that** the suction module (11) has at least one rake-like scraper (7) arranged inside the preferably hemispherical suction bell (4) before and/or after the sweeping roller (6) in the direction of the bed of the body of water, mainly in the direction of the cutting unit (5), which scraper is guided around at least part of the sweeping roller (6) and engages with at least some of the bristles thereof.

3. Device according to claim 1 and 2, **characterised in that** a sealing plate (3) and/or a baffle plate is fastened between the two pivoting arms (2) above the sweeping roller (6), which plate forms a gap with sweeping roller (6), which gap controls the flow speed along the length of the sweeping roller (6) by its shape.

4. Device according to any of claims 1 to 3, **characterised in that** a strainer and/or a grating is/are arranged above the sweeping roller (6) and above the sealing plate (3) and/or the baffle plate.

5. Device according to claim 4, **characterised in that** at least one knife is arranged below the strainer and/or the grating as the rotating cutting unit (5).

6. Device according to claim 5, **characterised in that** a static knife in the form of a double sickle is arranged below the rotating knife.

7. Device according to claim 5 and 6, **characterised in that** the knives are constructed in a scissors design.

8. Device according to any of claims 5 to 7, **characterised in that** the cutting unit (5) is driven by a motor/drive unit (8) arranged on an outer circumference of the suction bell (4).

9. Device according to any of claims 1 to 4, **characterised in that** one or more mowing units are arranged in front of the caterpillar chassis (10).

10. Device according to any of claims 5 to 9, **characterised in that** the pump (13) is arranged on or on the side of the suction bell.

11. Device according to claim 10, **characterised in that** the pump (13) is connected to the sludge pond or the sedimentation tank or the transportable container via pipelines (22; 14) or via the floating body (12; 18) or directly.

12. Device according to any of claims 1 to 4, **characterised in that** the sweeping roller (6) has its own drive unit.

13. Device according to any of claims 1 to 4 and 12, **characterised in that** the sweeping roller (6) is capable of rotating to the left and to the right.

14. Device according to claim 1, **characterised in that** the caterpillar chassis (10) has a rising slope at both ends.

15. Device according to claim 1 and 14, **characterised in that** the caterpillar chassis (10) has a toothed rack preferably in the middle on the inside thereof, in which a drive unit engages with its gearwheel.

16. Device according to any of claims 1 to 15, **characterised in that** the echo-sounder (26) and/or the GPS system and/or the camera system is arranged on the controllable floating body and is connected to the drive unit of the caterpillar chassis (10) and a controller therefor.

17. Device according to claim 16, **characterised in that** the controller generates a systematic cleaning profile of the bed of the body of water and ensures that the suction module (11) cleans the required sites on the bed of the body of water at least once.

18. Device according to claim 1, **characterised in that** the floating body (18) is a catamaran or a pontoon, which has its own drive unit.

19. Device according to claim 1, **characterised in that** the pipelines (14) and/or pressure hoses (22) are constructed as flat hoses, to which a further hose (24) preferably filled with compressed air is bonded or vulcanized or otherwise joined for surfacing purposes.

20. Device according to any of claims 1 to 19, **characterised in that** the suction module (11) is equipped with a buoyancy body.

## Revendications

1. Dispositif destiné à ramasser et à retirer des matières plastiques boueuses déposées sur des lits de cours d'eau, un corps flottant pilotable étant relié par l'intermédiaire de conduits flexibles avec un module aspirant,
***caractérisé en ce que***
le corps flottant (12 ;18) pilotable est équipé d'au moins une pompe/un compresseur (13) et d'au moins un groupe hydraulique (16), ainsi que d'au moins un générateur de courant (20) et est relié par l'intermédiaire de tuyauteries (22 ; 14) d'une part avec une zone de lavage ou un bassin de décantation ou un réservoir transportable sur terre, ainsi que d'autre part avec le module aspirant (11), lequel
➢ se déplace de manière autonome sur le fond du cours d'eau par l'intermédiaire d'un train de roulement spécial à chenilles (10),
➢ est relié par l'intermédiaire d'un câble (30) avec une sonde (26) placée en flottant à la surface de l'eau, au-dessus du module aspirant (11) et/ou avec un récepteur GPS,
➢ comporte entre les et/ou à l'avant et/ou à l'arrière des chenilles du train de roulement à chenilles (10) un bras pivotant (2), à un, à double ou à plusieurs bras, oscillant librement, qui s'adapte automatiquement au fond de l'eau, ainsi
➢ qu'une plaque d'étanchéité (3) placée entre le(s) bras pivotant(s) (2) et un cylindre balayeur (6),
➢ le cylindre balayeur (6) étant guidé dans une cloche aspirante (4),
➢ dans laquelle est placé un outil de coupe (5)
➢ et la cloche aspirante (4) comportant au moins une bride/tubulure aspirante (9) pour au moins un flexible d'aspiration (14)t.

2. Dispositif selon la revendication 1, ***caractérisé en ce qu'***à l'intérieur de la cloche aspirante (4), de préférence en forme de demi-coque, avant et/ou après le cylindre balayeur (6), en direction du fond de l'eau, principalement dans la direction de l'outil de coupe (5), le module aspirant (11) comporte au moins un racloir (7) de type râteau, qui est guidé au moins en partie autour du cylindre balayeur (6) et qui s'engage au moins en partie dans les poils de celui-ci.

3. Dispositif selon la revendication 1 et 2, ***caractérisé en ce qu***'au-dessus du cylindre balayeur (6), entre les deux bras pivotants (2) est fixée une plaqué d'étanchéité (3) et/ou une tôle de guidage, qui en direction du cylindre balayeur (6) forme une fente, qui par sa conformation commande la vitesse d'écoulement sur la longueur du cylindre balayeur (6).

4. Dispositif selon la revendication 1 à 3, ***caractérisé en ce qu***'au-dessus du cylindre balayeur (6) et au-dessus de la plaque d'étanchéité (3) et/ou de la tôle de guidage est placé(e) un tamis et/ou une grille.

5. Dispositif selon la revendication 4, ***caractérisé en ce qu***'en-dessous du tamis et/ou de la grille, au moins une lame est placée en tant qu'outil de coupe (5) rotatif.

6. Dispositif selon la revendication 5, ***caractérisé en ce qu***'en-dessous de la lame rotative est disposée une lame en forme de double-faucille, placée de manière statique.

7. Dispositif selon la revendication 5 et 6, ***caractérisé en ce que*** les lames sont conçues à la manière de ciseaux.

8. Dispositif selon la revendication 5 à 7, ***caractérisé en ce que*** l'outil de coupe (5) est entraîné par un entraînement/moteur (8) placé sur la périphérie extérieure de la cloche aspirante (4).

9. Dispositif selon la revendication 1 à 4, ***caractérisé en ce que*** à l'avant du train de roulement à chenilles (10) est/sont placée(s) une ou plusieurs faucheuse(s).

10. Dispositif selon la revendication 5 à 9, ***caractérisé en ce que*** la pompe(13) est placée sur ou dans ou sur le dessus de la cloche aspirante.

11. Dispositif selon la revendication 10, ***caractérisé en ce que*** la pompe (13) est reliée par l'intermédiaire de tuyauteries (22 ; 14), par l'intermédiaire du corps flottant (12 ; 18) ou directement avec la zone de rinçage ou le bassin de décantation ou le réservoir transportable.

12. Dispositif selon la revendication 1 à 4, ***caractérisé en ce que*** le cylindre balayeur (6) comporte un propre entraînement.

13. Dispositif selon la revendication 1 à 4 et 12, ***caractérisé en ce que*** le cylindre balayeur (6) dispose d'une marche à gauche ou d'une marche à droite.

14. Dispositif selon la revendication 1, ***caractérisé en ce que*** sur les deux extrémités, le train de roulement à chenilles (10) présente une inclinaison croissante.

15. Dispositif selon la revendication 1 et 14, ***caractérisé en ce que*** sur sa face intérieure, de préférence au centre, le train de roulement à chenilles (10) comporte une baguette dentée, dans lequel un entraînement s'engrène par sa roue dentée.

16. Dispositif selon la revendication 1 à 15, ***caractérisé en ce que*** la sonde (26) et/ou le système GPS et/ou le système de caméra est placé sur le corps flottant pilotable et est relié(e) avec l'entraînement du train de roulement à chenilles (10) et un système de commande de celui-ci.

17. Dispositif selon la revendication 16, ***caractérisé en ce que*** le système de commande génère une image de nettoyage systématique du fond de l'eau et assure que le module aspirant (11) nettoie au moins une fois les endroits nécessaires au fond de l'eau.

18. Dispositif selon la revendication 1, ***caractérisé en ce que*** le corps flottant (18) est un véhicule catamaran ou un ponton qui dispose d'un propre entraînement.

19. Dispositif selon la revendication 1, ***caractérisé en ce que*** les tuyauteries (14) et/ou les flexibles sous pression (22) sont conçu(e)s sous la forme de flexibles plats, sur lesquels à des fins de portance est collé ou vulcanisé ou fixé d'une autre manière un flexible (24) rempli d'air comprimé.

20. Dispositif selon la revendication 1 à 19, ***caractérisé en ce que*** le module aspirant (11) dispose d'un flotteur.
